# EUROPÄISCHE PATENTSCHRIFT

(11) **EP 2 407 349 B1**
(45) Veröffentlichungstag und Bekanntmachung des Hinweises auf die Patenterteilung: **16.04.2014**
(21) Anmeldenummer: 10169610.2
(22) Anmeldetag: 15.07.2010
(51) Int. Cl.: B60R 1/06, B60J 10/04, B60J 5/04

(54) **Dichtung und Außenrückblickspiegelanordnung**
Seal and external rear view mirror assembly
Joint et agencement de rétroviseur extérieur

(43) Veröffentlichungstag der Anmeldung: 18.01.2012
(73) Patentinhaber: SMR Patents S.à.r.l., 1653 Luxembourg (LU)
(72) Erfinder: Herrmann, Andreas, 71364, Winnenden-Baach (DE); Koenig, Reinhard, 70565, Stuttgart (DE)
(74) Vertreter: Weber-Bruls, Dorothée

(56) Entgegenhaltungen:
- JP-A- 6 191 348
- JP-A- 11 139 208
- JP-A- 2000 085 467
- JP-A- 2001 322 498
- JP-A- 2008 271 699

## Beschreibung

Die Erfindung betrifft eine Dichtung einer Außenrückblickspiegelanordnung gegenüber einer Karosserie oder einem Karosserieteil eines Kraftfahrzeugs gemäß dem Oberbegriff des Anspruchs 1 sowie eine Außenrückblickspiegelanordnung für ein Kraftfahrzeug mit solch einer Dichtung.

Eine Außenrückblickspiegelanordnung für ein Kraftfahrzeug besteht beispielsweise aus einem an dem Kraftfahrzeug angeordneten Spiegelfuß, welcher mittels einer Spiegelfußabdeckung verkleidet sein kann, und einem an dem Spiegelfuß angeordneten Außenrückblickspiegel. Der Außenrückblickspiegel umfasst ein Außenrückblickspiegelgehäuse, welches unter anderem einen dem Spiegelfuß zugeordneten Grundträger beherbergt.

Spiegelfuß und Grundträger sind gelenkig miteinander verbund **en** , **so dass der** Außenrückblickspiegel gegenüber dem Spiegelfuß aus einer Betriebsstellung in eine Anklappstellung und umgekehrt um eine Gelenkachse verschwenkbar ist. Spiegelfuß und Grundträger können als Druckgussteile beispielsweise aus dem selben Werkstoff hergestellt sein.

Auf dem Grundträger ist eine beispielsweise elektromotorisch betätigbare Verstellanordnung für ein Spiegelglas angeordnet. Die Verstellanordnung wirkt auf eine Trägerplatte ein, auf der das Spiegelglas angeordnet ist. Das Spiegelglas kann mittels einer Klebeverbindung auf der Trägerplatte montiert sein. Die Trägerplatte kann an der Verstellanordnung und/oder an der Grundplatte geführt und/oder gelagert sein. Unter dem Begriff Trägerplatte ist hierbei jegliche Art von Träger zu verstehen, der zumindest eine eben oder gewölbt ausgeführte, geschlossene oder gitterförmig unterbrochene, z.B. wabenförmige Trägerfläche aufweist, die geeignet ist, um darauf ein Spiegelglas etwa mittels einer Klebeverbindung oder durch Einklipsen z.B. hinter am Umfang der Trägerfläche hervorstehende und vom Umfang aus gesehen nach Innen zur Mitte der Trägerfläche hin kragende Rastmittel zu befestigen.

Das Außenrückblickspiegelgehäuse weist auf seiner in Betriebsstellung der Fahrtrichtung des Kraftfahrzeugs abgewandten Rückseite eine Öffnung auf, durch welche hindurch das Spiegelglas sichtbar ist bzw. in welcher das Spiegelglas angeordnet ist. Um eine Verstellbarkeit des Spiegelglases zu gewährleisten, ist allseitig zwischen Spiegelglas bzw. Trägerplatte und den die Öffnung umgebenden Wandungen des Außenrückblickspiegelgehäuses ein Abstand eingehalten, so dass sich um das Spiegelglas umlaufend ein Spalt zu den die Öffnung umgebenden Wandungen des Außenrückblickspiegelgehäuses ergibt.

Der Außenrückblickspiegel kann neben oder anstelle eines elektromotorisch verstellbaren Spiegelglases eine oder mehrere weitere elektrische Komponenten beherbergen. Beispiele für solche elektrische Komponenten sind:
- eine Wiederholblinkleuchte,
- eine Einstiegsleuchte,
- ein beheizbares Spiegelglas,
- ein elektrochromatisch abblendbares Spiegelglas,
- ein Erfassungs- und/oder Wamanzeigemodul für eine Fahrassistenzvorrichtung, wie etwa eine Totwinkelüberwachung, eine Spurverlasswamung, eine Annäherungsüberwachung, oder dergleichen,
- einen Sensor zur Erfassung von Fahr- und/oder Umgebungszuständen, wie beispielsweise Temperatur, Helligkeit, Verschmutzungsgrad, Beleuchtungssituation, beispielsweise um das Spiegelglas automatisch zu beheizen und/oder z.B. elektrochromatisch abzublenden.

Darüber hinaus kann der Außenrückblickspiegel eine oder mehrere Kombinationen der beispielhaft angeführten elektrischen Komponenten aufweisen.

Die elektrischen Komponenten im Außenrückblickspiegel sind mittels einer elektrischen Verbindung durch den Spiegelfuß hindurch mit einer kraftfahrzeugseitigen Stromversorgung und/oder mit einem kraftfahrzeugseitigen Steuergerät beispielsweise über ein Bordnetz und/oder ein Bussystem verbunden. Die elektrische Verbindung besteht beispielsweise aus einem Kabelbaum mit mehreren Kabeln, gegebenenfalls jeweils gesonderten Steckverbindungen zum elektrischen Anschluss der elektrischen Komponenten jeweils einzeln oder gruppenweise und wenigstens einer elektrischen Steckverbindung zur weiterführenden elektrischen Kontaktierung kraftfahrzeugseitig.

Um hohen Qualitätsanforderungen in der Automobilindustrie gerecht zu werden, ist bekannt, Hohlräume in der Karosserie oder in Karossereiteilen oder in Abschnitten der Karosserie oder der Karossereiteile zu verschließen oder abzuschließen und/oder zu versiegeln, beispielsweise um das Eindringen von Schmutz und/oder Feuchtigkeit zu vermeiden. Ebenfalls bekannt ist, beispielsweise für eine Durchführung eines Kabelbaums vorgesehene Öffnungen in der Karosserie oder in Karossereiteilen zu verschließen, so dass kein Schmutz und/oder keine Feuchtigkeit unerwünscht durch diese Öffnungen hindurchtreten kann. Ein Beispiel für einen abgeschlossenen Hohlraum in einem Karosserieteil ist ein Trockenraum in einer Kraftfahrzeugtür. Der Trockenraum nimmt einen Abschnitt der Kraftfahrzeugtür beispielsweise zwischen dem eine Außenwand bildenden Türaußenblech und einer Trennwand im Türinnenraum ein. Der Trockenraum kann sich jedoch auch an eine Trennwand im Türinnenraum zur Türinnenseite hin anschließen. Er kann beispielsweise dazu dienen, elektrische Steckverbindungen korrosionsgeschützt zu beherbergen. Beispielsweise kann eine solche elektrische Steckverbindung einer elektrischen Verbindung zur Stromversorgung und/oder Steuerung einer gegebenenfalls in dem Hohlraum angeordneten elektrischen Komponente dienen, wie etwa eines elektrischen Fensterhebers. Ein Beispiel für eine zur Durchführung eines Kabelbaums vorgesehene zu verschließende Öffnung ist eine durch eine oder mehrere aufeinanderfolgende Wandungen der Karosserie oder eines Karosserieteils beispielsweise in einen Hohl- oder Trockenraum oder von einem Karosserieteil in ein anderes Karosserieteil führende Öffnung.

Demnach können eine oder mehrere gegen das Eindringen von Schmutz und/oder Feuchtigkeit verschlossene Öffnungen zur Durchführung eines oder mehrerer Kabelbäume in dem Hohl- oder Trockenraum dienen. Darüber hinaus können zu verschließende Öffnungen vorgesehen sein, durch die hindurch ein Kabelbaum einen zwischen zwei oder mehreren Wandungen eines Karosserieteils liegenden Hohlraum von der einen Seite kommend und auf der anderen Seite wieder austretend passiert, beispielsweise um in einen sich an den Hohlraum anschließenden und von diesem durch eine Wand getrennten Trockenraum einzutreten.

Zur Anbringung einer Außenrückblickspiegelanordnung an eine Karosserie oder ein Karosserieteil eines Kraftfahrzeugs kann deshalb vorgesehen sein, den Spiegelfuß sowie gegebenenfalls die Spiegelfußverkleidung gegen das Kraftfahrzeug abzudichten. Hierzu ist bekannt, zumindest eine Partie der karosserieseitig anliegenden Fläche des Spiegelfußes mit einer auch als Dichtpad bezeichneten mattenartigen Unterlage zu versehen. Das Dichtpad kann aus einem aufgeschäumten Werkstoff bestehen. Bei der Partie der karosserieseitig anliegenden Fläche des Spiegelfußes handelt es sich beispielsweise um einen um den kraftfahrzeugseitigen Austritt des Kabelbaums aus dem Spiegelfuß herumliegenden Flächenabschnitt.

Darüber hinaus kann vorgesehen sein, die kraftfahrzeugseitige Durchführung des vom Spiegelfuß kommenden Kabelbaums beispielsweise durch eine Kraftfahrzeugtür oder gegebenenfalls durch einen Abschnitt einer Kraftfahrzeugtür hindurch ebenfalls abzudichten. Hierfür kann eine Dichttülle vorgesehen sein. Die Dichttülle ist dabei so ausgestaltet, dass beispielsweise entlang des Kabelbaums kein Schmutz und keine Feuchtigkeit ins Innere der Kraftfahrzeugtür oder beispielsweise zumindest ins Innere eines einen Abschnitt der Kraftfahrzeugtür einnehmenden abgedichteten Hohlraums eindringen kann, durch welchen hindurch ein Kabelbaum den Hohlraum von der einen Seite kommend und auf der anderen Seite wieder austretend passiert. Die Dichttülle kann gleichzeitig dazu dienen, die Durchführung des Kabelbaums durch ein zuvor erwähntes Dichtpad hindurch abzudichten.

Nachteilig an den bekannten Lösungen zur Abdichtung des Spiegelfußes sowie gegebenenfalls die Spiegelfußverkleidung gegen das Kraftfahrzeug mittels eines Dichtpads und der kraftfahrzeugseitigen Durchführung des vom Spiegelfuß kommenden Kabelbaums mittels einer Dichttülle ist, dass sowohl Dichtpad und Dichttülle während der Montage jeweils gegenüber ihrer bestimmungsgemäßen Lage relativ zum Spiegelfuß als auch relativ zueinander verrutschen können. Dies kann eine mangelhafte Abdichtung zur Folge haben, wodurch in Folge Schmutz und/oder Feuchtigkeit durch eine für eine Durchführung eines Kabelbaums vorgesehene Öffnungen hindurchtreten und beispielsweise in einen mittels des Dichtpads und/oder der Dichttülle gegenüber der Umgebung abgeschlossenen Hohlraum eindringen kann.

Durch DE 10 115 693 A1 ist darüber hinaus bekannt, eine Durchführung für einen Kabelbaum mittels eines den Kabelbaum umschließenden Formteils und einer verbleibende Zwischenräume zwischen Formteil und Kabelbaum füllenden gelartigen Masse zu verschließen.

Nachteilig hieran ist die aufwändige Montage und Wartung durch Verwendung der gelartigen Masse. Darüber hinaus bleibt hierbei die lage- und positionsgenaue Ausrichtung von Formteil und einem gegebenenfalls erforderlichen Dichtpad ungelöst.

Die JP 2008 27 1699 A offenbart eine Kabelbaum-Dichtung für einen Außenspiegel, ebenso wie die gattungsgemäße JP 11 139 208.

Eine Aufgabe der Erfindung ist die Schaffung einer verbesserten, Montage-freundlichen Dichtung einer Außenrückblickspiegelanordnung gegenüber einem Kraftfahrzeug.

Die Aufgabe wird gelöst durch die Merkmale des unabhängigen Anspruchs 1.

Gemäß einem ersten Gegenstand der Erfindung ist eine Dichtung einer Außenrückblickspiegelanordnung gegenüber einem Karosserieteil eines Kraftfahrzeugs vorgesehen. Die Dichtung ist einstückig ausgeführt. Die Dichtung besteht zumindest aus wenigstens einem Dichtpad und mindestens einer integral an das Dichtpad angeformten, auf dem Dichtpad aufstehenden Dichttülle. Das Dichtpad deckt wenigstens eine Partie der karosserieseitig anliegenden Fläche eines Spiegelfußes der Außenrückblickspiegelanordnung ab. Die Dichttülle dient einer Abdichtung wenigstens einer karosserieseitig zur Durchführung eines Kabelbaums der Außenrückblickspiegelanordnung vorgesehenen Durchführungsöffnung. Die Dichttülle ist als ein Hohlkörper ausgestaltet. Am Schnittpunkt der Symmetrieachse des Hohlkörpers mit dem Dichtpad ist eine Durchgangsöffnung für den Kabelbaum vorgesehen. Die Symmetrieachse ist hierbei definiert als eine zumindest abschnittsweise beispielsweise gerade oder gekrümmt verlaufende stetige Kurve, auf der aufeinanderfolgend entlang des auf dem Dichtpad aufstehenden Hohlkörpers in dessen Inneren liegende Punkte liegen. Die Symmetrieachse kann beispielsweise durch die Mittelpunkte aufeinanderfolgender Querschnitte des Hohlkörpers gebildet sein. Die Symmetrieachse kann besonders bevorzugt die geometrische Symmetrieachse oder Symmetriekurve des Hohlkörpers sein oder eine solche geometrische Symmetrieachse oder Symmetriekurve zumindest abschnittsweise umfassen. Das dem Dichtpad abgewandte freie Ende der Dichttülle ist offen. Bei dem Hohlkörper kann es sich beispielsweise um einen Rotationshohlkörper handeln. Die Symmetrieachse entspricht hierbei vorzugsweise der Rotationsachse des Rotationshohlkörpers. Die Durchgangsöffnung für den Kabelbaum ist hierbei am Schnittpunkt der Rotationsachse des Rotationshohlkörpers der Dichttülle mit dem Dichtpad vorgesehen. Neben einem Rotationshohlkörper sind auch beliebige andere Formen denkbar, beispielsweise ein Zylinder, Kegel, oder Kegelabschnitt sowohl mit kreisförmiger, als auch mit mehreckiger Grundfläche, als auch mit beispielsweise kontinuierlich veränderlichen Geometrien in aufeinanderfolgenden Querschnitten entlang der Symmetrieachse. Die Symmetrieachse kann hierbei in einem beliebigen Winkel zur durch das Dichtpad gebildeten Fläche verlaufen. Grundsätzlich ist auch denkbar, dass die Symmetrieachse wenigstens eintlang eines Abschnitts entlang einer Kurve verläuft, anstelle entlang einer bevorzugt vorgesehenen Geraden.

Der Begriff Karosserieteil umfasst hierbei sowohl die Karosserie eines Kraftfahrzeugs als Ganzes, als auch jegliche zur Karosserie zählenden Teile eines Kraftfahrzeugs, wie etwa Türen, Hauben, Deckel, Chassis etc. für sich allein, als auch Abschnitte bzw. Partien der Karosserie oder deren Teile. Der Begriff Durchführungsöffnung bezeichnet in diesem Zusammenhang eine in einem solchen Karosserieteil zur karosserieseitigen Durchführung des Kabelbaums der Außenrückblickspiegelanordnung vorgesehene, beispielsweise in einen abgeschlossenen Hohlraum hinein- oder aus einem solchen herausführende Öffnung.

Die Dichttülle ist vorzugsweise derart ausgebildet, dass sie lang genug auf dem Dichtpad aufsteht, um einen beispielsweise abgeschlossenen Hohlraum passierenden Kabelbaum, der durch eine erste Durchführungsöffnung von einer ersten Seite her kommend in den Hohlraum hinein und durch eine zweite Durchführungsöffnung auf einer anderen, zweiten Seite aus dem Hohlraum wieder austritt, unter gleichzeitiger Abdichtung wenigstens zweier wie beschrieben aufeinander folgender Durchführungsöffnungen zumindest entlang des gesamten Durchtritts durch den Hohlraum hindurch zu umhüllen. Durch diese Umhüllung des Kabelbaums wenigstens entlang des gesamten Durchtritts des Kabelbaums durch den Hohlraum hindurch und durch das **gleichzeitige Abdichten der in den Hohlraum hinein**- und hinausführenden Durchführungsöffnungen wird die Gefahr des Eindringens von Schmutz und/oder Feuchtigkeit in den gegenüber der Umgebung abgeschlossenen Hohlraum vollständig verhindert. Darüber hinaus wird das Eindringen von Schmutz und/oder Feuchtigkeit in einen sich an den Hohlraum anschließenden Trockenraum, in welchen der Kabelbaum nach verlassen des Hohlraums durch die zweite Durchführungsöffnung hindurch eintreten kann, besonders wirkungsvoll verhindert, da Schmutz und/oder Feuchtigkeit durch die gesamte, sich durch den Hohlraum hindurch erstreckende Dichttülle durchkriechen müsste, um in den Trockenraum zu gelangen.

Die Dichttülle kann mindestens einen jüngsten Innendurchmesser aufweisen, der vorzugsweise kleiner ist, als ein kleinster Außendurchmesser des Kabelbaums. Die Dichttülle kann darüber hinaus mindestens einen größten Außendurchmesser aufweisen, der vorzugsweise größer ist, als ein Innendurchmesser der zur karosserieseitigen Durchführung des Kabelbaums vorgesehenen Durchführungsöffnung. Hierdurch wird sowohl eine optimale Abdichtung zwischen Dichttülle und Kabelbaum, als auch zwischen Dichttülle und Durchführungsöffnung erreicht. Darüber hinaus wird durch die integrale Ausgestaltung der Dichtung mit Dichtpad und Dichttülle sichergestellt, dass Dichtpad und Dichttülle während der Montage jeweils gegenüber ihrer bestimmungsgemäßen Lage relativ zueinander nicht mehr verrutschen können.

Die Dichttülle kann vom Dichtpad aus gesehen trichterförmig erweiternd ausgeführt sein, beispielsweise gemäß einer linearen, parabolischen oder hyperbolischen Funktion. Alternativ oder zusätzlich ist auch ein konvergentdivergenter Querschnittsverlauf der Dichttülle bzw. des die Dichttülle bildenden Hohlraums denkbar.

Die Dichtung besteht vorzugsweise aus einem zumindest in einer Richtung elastisch verformbaren Werkstoff oder Werkstoffmix. Der Begriff Werkstoffmix umfasst hierbei sowohl homogene, als auch inhomogene sowie beispielsweise zumindest abschnittsweise, z.B. im **Bereich der Dichttülle faserverstärkte Werkstoffe**, **Werkstoffmischungen und**

Werkstoffkombinationen.

Der Werkstoff oder Werkstoffmix kann wenigstens im Bereich des Dichtpads aufgeschäumt sein.

Die Dichttülle ist an ihrem dem Dichtpad abgewandten freien Ende mit wenigstens einer Montagelasche versehen , welche von einer dem Spiegelfuß abgewandten Seite her durch wenigstens eine mittels der Dichttülle abzudichtende karosserieseitige Durchführungsöffnung hindurch gegriffen werden kann, um die Dichttülle gegebenenfalls unter elastischer Verformung positions-und lagerichtig durch die Durchführungsöffnung hindurchzuziehen.

Zusätzlich können für diesen Vorgang gesonderte Montagewerkzeuge vorgesehen sein.

An dem Dichtpad der Dichtung, beispielsweise an einer der Dichttülle abgewandten Seite des **Dichtpads**, **sowie gegebenenfalls an der von dem Dichtpad abgedeckten Partie der** karosserieseitig anliegenden Fläche des Spiegelfußes der Außenrückblickspiegelanordnung sind vorzugsweise korrespondierende Befestigungselemente zur Fixierung der Dichtung am Spiegelfuß vorgesehen.

Ein erstes Beispiel für korrespondierende Befestigungselemente sind eine oder mehrere in der von dem Dichtpad abgedeckten Partie der karosserieseitig anliegenden Fläche des Spiegelfußes verlaufende Nuten, welche jeweils eine in einer Richtung beispielsweise lokal normal zu der Fläche wirksame Hintergreifung aufweisen, sowie wenigstens eine in die mindestens eine Nut formschlüssig einführbare Feder. Die Nut mit Hintergreifung und die Feder weisen dabei korrespondierende Geometrien auf, so dass eine beispielsweise von einem Ende der Nut in diese hinein geschobene Feder normal zur Fläche nicht aus der Nut herausgezogen werden kann. Die mindestens eine Nut kann wahlweise am Dichtpad oder am Spiegelfuß angeordnet sein. Ebenso **verhält es sich mit der mindestens einen Feder**. **Vorteile korrespondierender** Befestigungselemente, welche Nut und Feder umfassen sind, dass sie gleichzeitig eine Verdrehsicherung bilden, wodurch die Dichtung aus Dichtpad und Dichttülle nicht nur positionsrichtig, sondern auch lagerichtig am Spiegelfuß fixiert werden kann. Sowohl die Nut, als auch die Feder können wahlweise am Dichtpad oder am Spiegelfuß vorgesehen sein. Sind mehr als eine Nut-und-Federverbindung vorgesehen, ist auch eine gemischte Anordnung denkbar, bei der am Dichtpad und am Spiegelfuß sowohl Nut als auch Feder angeordnet sein können, die **dann dem jeweils am gegenüberliegenden Bauteil angeordneten** korrespondierenden Befestigungselement zugeordnet sind. Durch eine solche Kombination kann eine eindeutige **Position und Lage definiert werden, wodurch Fehler bei der Montage der Dichtung am** Spiegelfuß vermieden werden können.

Nut und Feder können dabei beispielsweise schwalbenschwanzartig ineinandergreifen.

Ein zweites Beispiel für korrespondierende Befestigungselemente sind mindestens ein bevorzugt am Dichtpad auf dessen der Dichttülle abgewandter Seite angeordneter Fortsatz sowie eine in der von dem Dichtpad abgedeckten Partie der karosserieseitig anliegenden Fläche des Spiegelfußes angeordnete, dem Fortsatz zugeordnete Aufnahmeöffnung. Vom Dichtpad aus gesehen besteht **der Fortsatz vorzugsweise aus einem ersten Abschnitt mit beispielsweise konstanten** Querschnittsabmessungen. Diese Querschnittsabmessungen entsprechen bevorzugt in etwa den Querschnittsabmessungen der Aufnahmeöffnung. An den ersten Abschnitt schließt sich eine Verdickung mit zunehmenden Querschnittsabmessungen an, welche unter elastischer Verformung durch die Aufnahmeöffnung hindurch passt, und im Anschluss an die elastisch Verformung eine reib- und/oder formschlüssige Verbindung zumindest mit einer die Aufnahmeöffnung umgebenden Partie der karosserieseitig anliegenden Fläche des Spiegelfußes eingeht. Bei der Partie der karosserieseitig anliegenden Fläche des Spiegelfußes handelt es sich beispielsweise um einen um den kraftfahrzeugseitigen Austritt des Kabelbaums aus dem Spiegelfuß herumliegenden Flächenabschnitt. Sind mehr als ein Fortsatz und entsprechend viele Aufnahmeöffnungen vorgesehen, so bilden diese beim Ineinandergreifen ebenfalls eine Verdrehsicherung. **Alternativ oder zusätzlich ist möglich, dass der Fortsatz und die** Aufnahmeöffnung eine Querschnittsgeometrie aufweisen, welche ein Verdrehen des Fortsatzes in der Aufnahmeöffnung unmöglich macht.

Der Fortsatz kann an seinem dem Dichtpad abgewandten und dem Spiegelfuß zugewandten freien Ende mit wenigstens einem Montagenippel versehen sein. Der Montagenippel ist von der dem Dichtpad abgewandten Seite des Spiegelfußes durch die Aufnahmeöffnung am Spiegelfuß hindurch greifbar, um den Fortsatz zur Fixierung der Dichtung am Spiegelfuß unter elastischer Verformung der Verdickung durch die Aufnahmeöffnung hindurchzuziehen.

Alternativ oder zusätzlich können für diesen Vorgang gesonderte Montagewerkzeuge vorgesehen sein.

Darüber hinaus können eine oder mehrere z.B. am Umfang des Dichtpads in Richtung des Spiegelfußes abstehende Lippen vorgesehen sein, welche in ihrer Geometrie beispielsweise an Aussparungen an und/oder an Ränder der dem Dichtpad zugewandten Fläche des Spiegelfußes angepasst sind. Diese können zusätzlich zu einer Verdrehsicherung beitragen und so helfen, eine lage- und positionsgenaue Ausrichtung von Dichtung und Spiegelfuß relativ zueinander während der Montage sicherzustellen.

Wichtig ist hervorzuheben, dass die sofern jeweils für sich oder in beliebiger Kombination vorgesehen Montagelaschen, Nuten und/oder Federn, Fortsätze, Montagenippel, Lippen, bevorzugt integral an die Dichtung mit Dichtpad und Dichttülle angeformt sind.

Ein zweiter Gegenstand der Erfindung betrifft eine Außenrückblickspiegelanordnung für ein Kraftfahrzeug mit einer zuvor beschriebenen Dichtung.

Weitere Merkmale der Erfmdung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Es zeigen in schematischer Darstellung:
- Fig. 1: eine Draufsicht auf eine karosserieseitig anliegenden Fläche eines Spiegelfußes einer Außenrückblickspiegelanordnung.
- Fig. 2: einen ersten Schnitt durch eine Durchführung eines vom Spiegelfuß einer Außenrückblickspiegelanordnung kommenden Kabelbaums durch einen Abschnitt eines Karosserieteils.
- Fig. 3: einen zweiten Schnitt durch eine Durchführung eines vom Spiegelfuß einer Außenrückblickspiegelanordnung kommenden Kabelbaums durch einen Abschnitt eines Karosserieteils.
- Fig.4: einen Austritt einer Durchführung eines vom Spiegelfuß einer Außenrückblickspiegelanordnung kommenden Kabelbaums auf einer dem Spiegelfuß abgewandten Seite eines Karosserieteils in perspektivischer Ansicht.
- Fig. 5: ein erstes Ausführungsbeispiel einer für eine Durchführung eines vom Spiegelfuß einer Außenrückblickspiegelanordnung kommenden Kabelbaums durch einen Abschnitt eines Karosserieteils vorgesehenen Dichtung in perspektivischer Ansicht von einer dem Spiegelfuß abgewandten Seite her gesehen.
- Fig. 6: die Dichtung aus Fig. 5 in einer Seitenansicht.
- Fig. 7: die Dichtung aus Fig. 5 in einer Draufsicht von einer dem Spiegelfuß abgewandten Seite her gesehen.
- Fig. 8: ein zweites Ausführungsbeispiel einer für eine Durchführung eines vom Spiegelfuß einer Außenrückblickspiegelanordnung kommenden Kabelbaums durch einen Abschnitt eines Karosserieteils vorgesehenen Dichtung in perspektivischer Ansicht von einer dem Spiegelfuß zugewandten Seite her gesehen.
- Fig. 9: die Dichtung aus Fig. 8 in perspektivischer Ansicht von einer dem Spiegelfuß abgewandten Seite her gesehen.

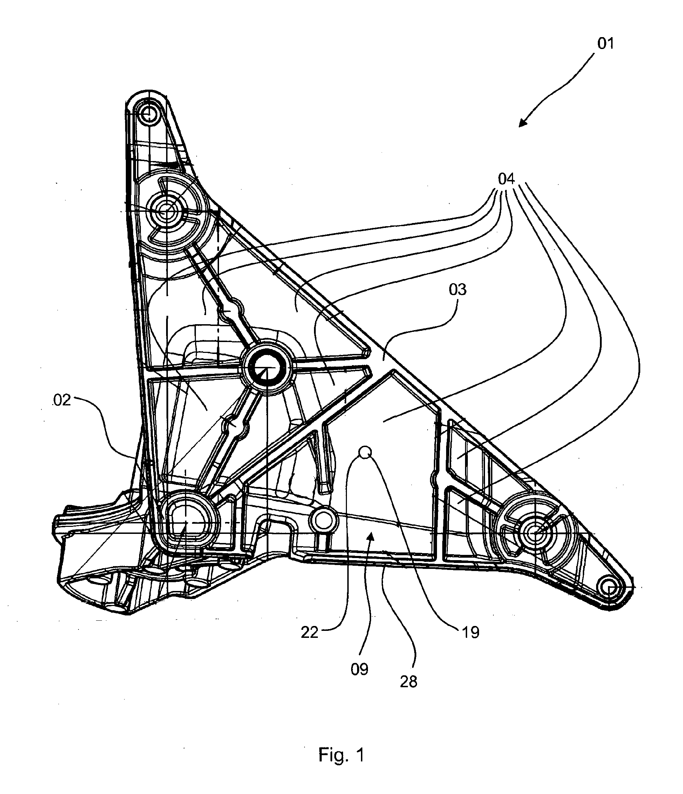

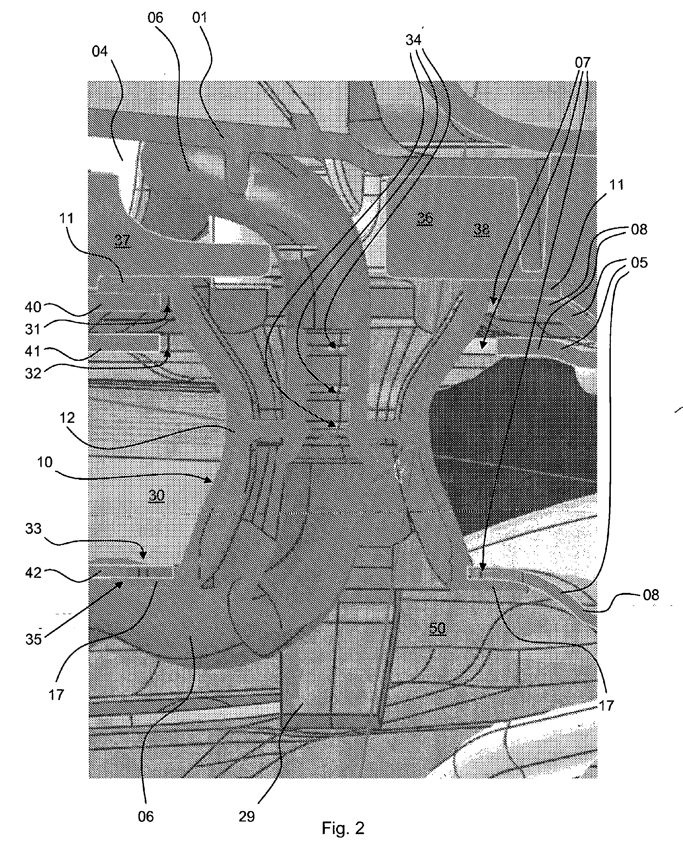

Ein in Fig. 1 dargestellter Spiegelfuß 01 einer Außenrückblickspiegelanordnung für ein Kraftfahrzeug umfasst im Wesentlichen einen spiegelfußseitigen Teil 02 einer gelenkigen **Verbindung zwischen Spiegelfuß 01 und einem beispielsweise in einem** Außenrückblickspiegelgehäuse eines Außenrückblickspiegels der Außenrückblickspiegelanordnung beherbergten Grundträger sowie eine bei bestimmungsgemässer Anbringung an einem Karosserieteil 05 (Fig. 2, Fig. 3, Fig. 4) des Kraftfahrzeugs karosserieseitig anliegende Fläche 03.

In der Fläche 03 können beispielsweise zur Materialeinsparung und zur damit einhergehenden Gewichtseinsparung Aussparungen 04 vorgesehen sein.

Bei der Anbringung der Außenrückblickspiegelanordnung an das Karosserieteil 05 ist vorgesehen, wenigstens den Spiegelfuß 01 gegenüber dem Karosserieteil 05 abzudichten. Dies umfasst die kraftfahrzeugseitige Durchführung eines vom Spiegelfuß 01 kommenden **Kabelbaums 06 der Außenrückblickspiegelanordnung durch wenigstens eine** Durchführungsöffnung 07 in wenigstens einer Wand 08 des Karosserieteils 05 hindurch ebenfalls abzudichten (Fig. 2, Fig. 3, Fig. 4).

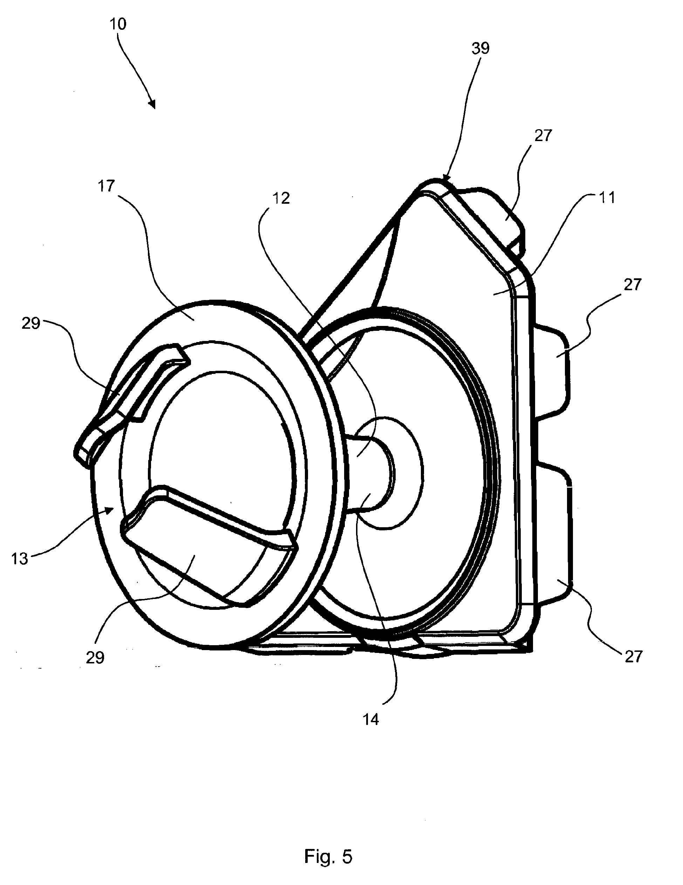

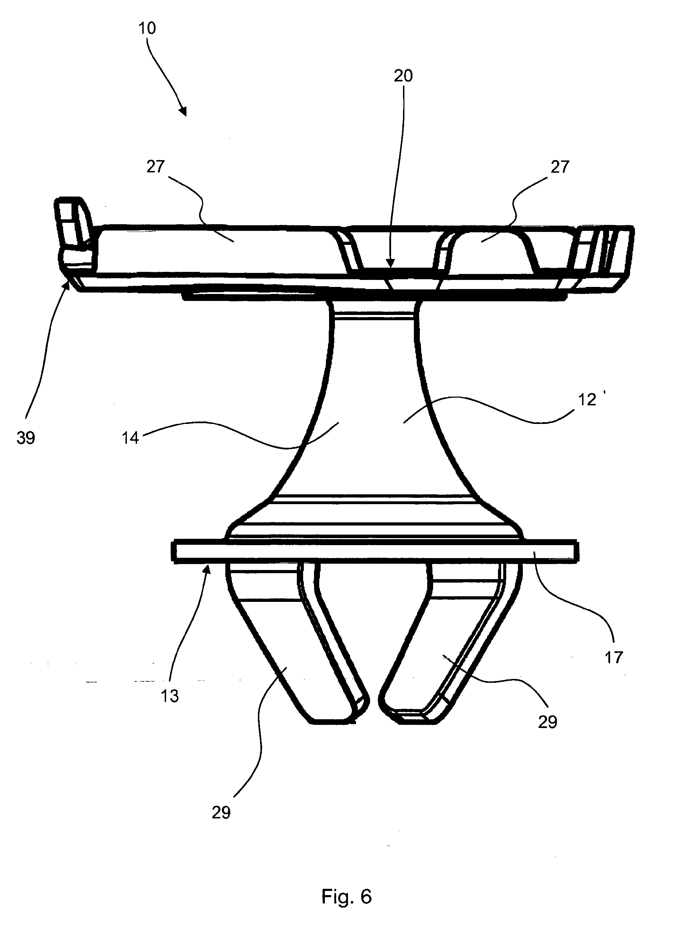

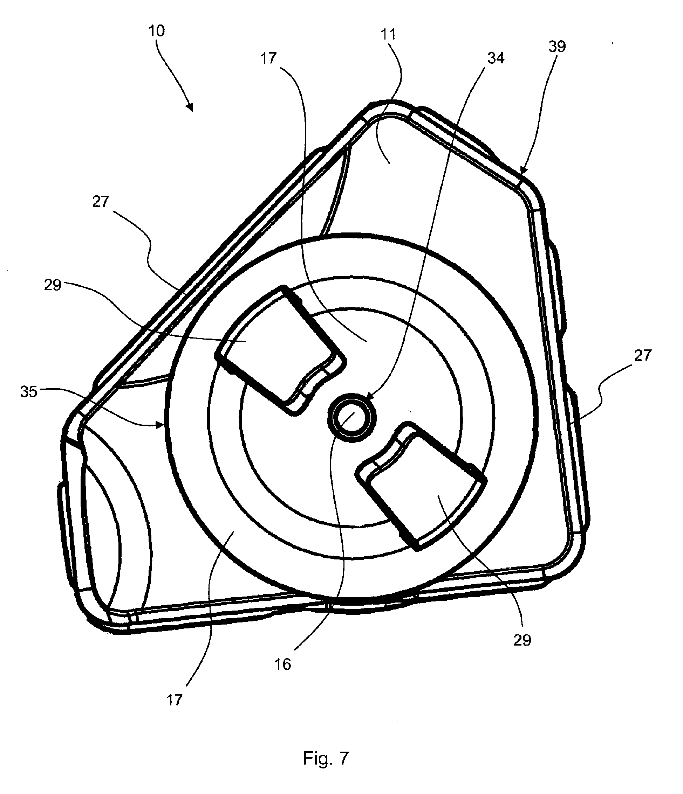

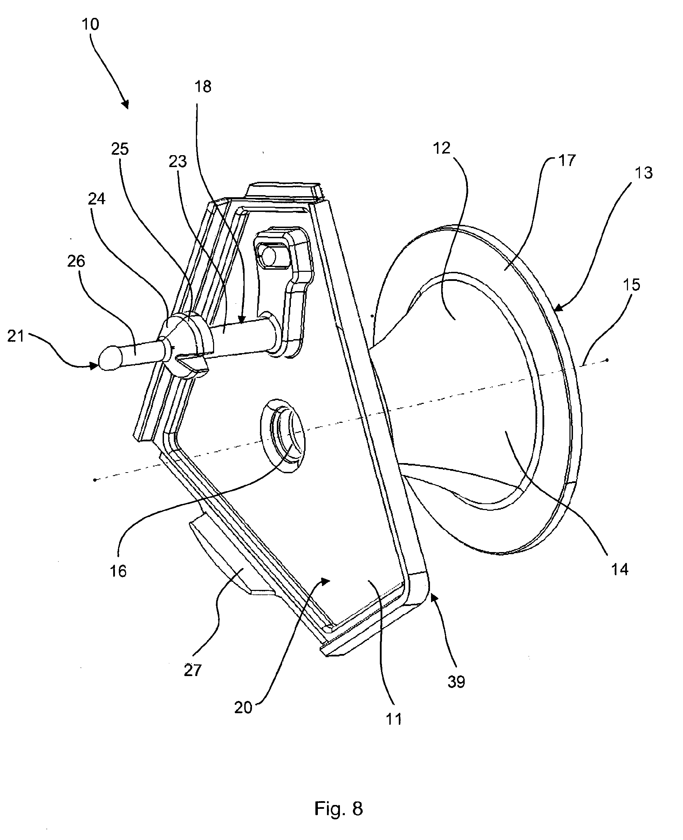

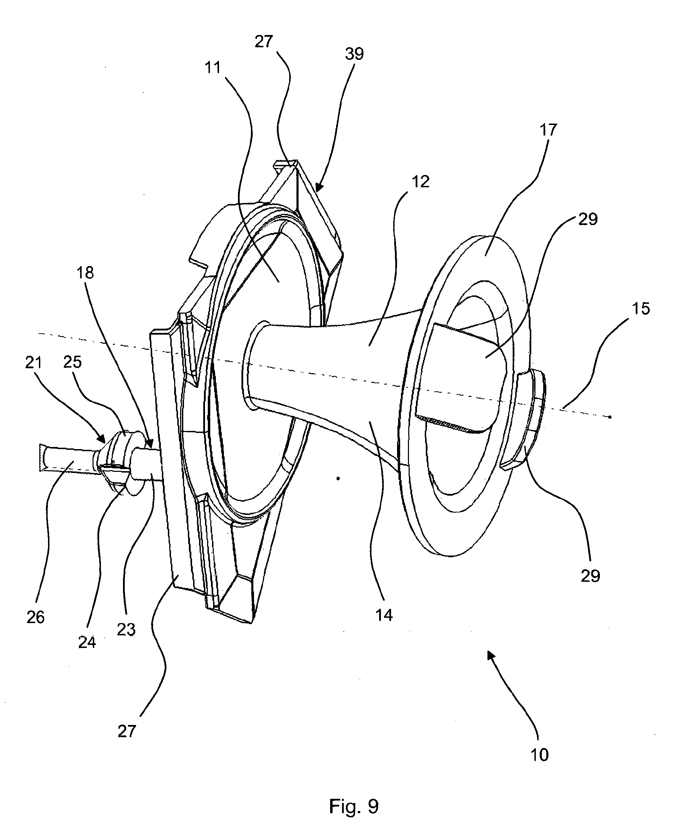

Hierzu ist eine Dichtung 10 vorgesehen, welche einstückig ausgeführt ist und zumindest ein Dichtpad 11 und eine integral an das Dichtpad 11 angeformte Dichttülle 12 umfasst (Fig. 5 bis Fig. 9). Das Dichtpad 11 deckt wenigstens eine Partie 09 der karosserieseitig anliegenden Fläche 04 des Spiegelfußes 01 der Außenrückblickspiegelanordnung ab (Fig. 1). Die Dichttülle 12 dient zur Abdichtung wenigstens einer karosserieseitig zur Durchführung des Kabelbaums 06 vorgesehenen Durchführungsöffnung 07 (Fig. 2 bis Fig. 4). Die Dichttülle 12 ist als ein am dem Dichtpad 11 abgewandten freien Ende 13 offener Hohlkörper 14 ausgestaltet. Am Schnittpunkt der Symmetrieachse 15 des Hohlkörpers 14 mit einer das Dichtpad 11 einschließenden Fläche ist in dem Dichtpad 11 eine Durchgangsöffnung 16 für den Kabelbaum 06 vorgesehen (Fig. 8, Fig. 9).

Am freien Ende 13 der Dichttülle 12 kann ein von der Symmetrieachse 15 aus gesehen radial nach außen kragender Flansch 17 vorgesehen sein.

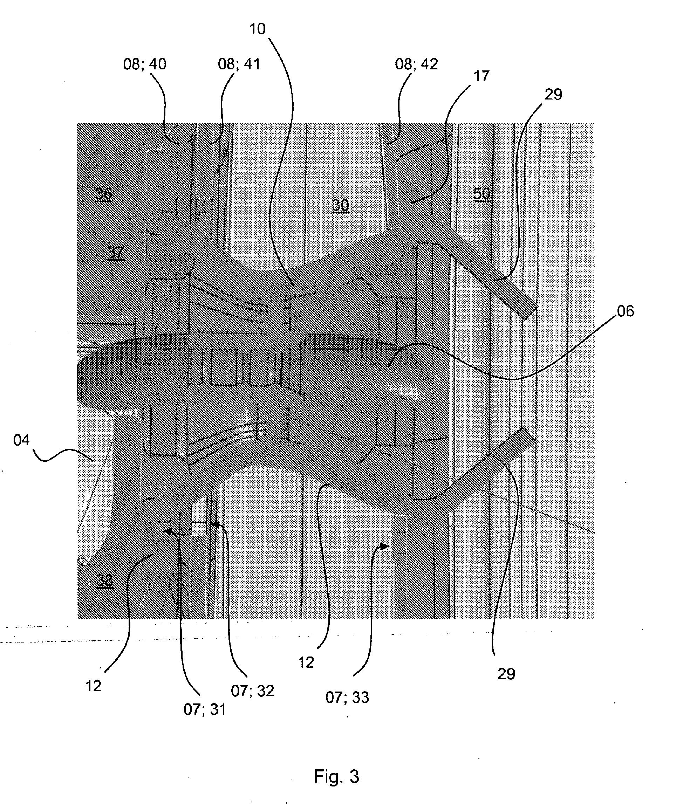

Die Dichttülle 12 kann, wie in den Fig. 5 bis 9 dargestellt, vom Dichtpad 11 aus gesehen trichterförmig erweiternd ausgeführt sein. Alternativ kann die Dichttülle 12 wie in den Fig. 2 und 3 dargestellt einen konvergent-divergenten Querschnittsverlauf aufweisen.

An dem Dichtpad 11 sowie an der karosserieseitig anliegenden Fläche 03 des Spiegelfußes 01 können, wie in den Fig. 1, 8 und 9 dargestellt, korrespondierende Befestigungselemente 18, 19 zur Fixierung der Dichtung 10 am Spiegelfuß 01 vorgesehen sein.

Bei den korrespondierenden Befestigungselementen 18, 19 kann es sich um mindestens einen am Dichtpad 11 auf dessen der Dichttülle 12 abgewandter Seite 20 angeordneten Fortsatz 21 handeln (Fig. 8, Fig. 9), sowie wenigstens eine in der von dem Dichtpad 11 abgedeckten Partie 09 der karosserieseitig anliegenden Fläche 03 des Spiegelfußes 01 angeordnete, dem Fortsatz 21 zugeordnete Aufnahmeöffnung 22 (Fig. 1).

Der Fortsatz 21 weist vom Dichtpad 11 aus gesehen vorzugsweise wenigstens einen ersten Abschnitt 23 mit Querschnittsabmessungen auf, welche mit den Querschnittsabmessungen der Aufnahmeöffnung 22 korrespondieren. An den ersten Abschnitt 23 schließt sich vom Dichtpad 11 aus gesehen vorzugsweise ein zweiter Abschnitt 24 mit einer Verdickung 25 an, welche unter elastischer Verformung durch die Aufnahmeöffnung 22 hindurch passt und im Anschluss an die elastisch Verformung eine reib- und/oder formschlüssige Verbindung zumindest mit einer die Aufnahmeöffnung 22 umgebenden Partie der karosserieseitig anliegenden Fläche 03 des Spiegelfußes 01 eingeht. Die form-und/oder reibschlüssige Verbindung verhindert, dass der Fortsatz 21 nach dem Einsetzten in die Aufnahmeöffnung 22 unter den im Normalfall zumindest während der Montage auftretenden Kräften wieder aus der Aufnahmeöffnung 22 gezogen werden kann.

An seinem dem Dichtpad 11 abgewandten und dem Spiegelfuß 01 zugewandten freien Ende kann der Fortsatz 21 mit wenigstens einem Montagenippel 26 versehen sein. Der Montagenippel 26 **ist von der dem Dichtpad 11 abgewandten Seite des Spiegelfußes 01 durch die** Aufnahmeöffnung 22 am Spiegelfuß 01 hindurch greifbar, um den Fortsatz 21 während der Montage zur Fixierung der Dichtung 10 am Spiegelfuß 01 unter elastischer Verformung der Verdickung 25 durch die Aufnahmeöffnung 22 hindurchzuziehen. Bei der dem Dichtpad 11 abgewandten Seite des Spiegelfußes 01 handelt es sich um eine dem Betrachter der Fig. 1 abgewandte Seite.

Beispielsweise am Umfang 39 des Dichtpads 11 kann, wie in den Fig. 5, 6, 8 und 9 erkennbar, mindestens eine in Richtung des Spiegelfußes 01 abstehende Lippe 27 vorgesehen sein. Die mindestens eine Lippe 27 ist in ihrer Geometrie an mindestens eine Aussparung 04 an und/oder mindestens einen Rand 28 der karosserieseitig anliegenden Fläche 03 des Spiegelfußes 01 zumindest im Bereich der vom Dichtpad 11 abgedeckten Partie 09 angepasst (Fig. 1). Die mindestens eine Lippe 27 dient unter anderem einer Verdrehsicherung der Dichtung 10 gegenüber dem Spiegelfuß 01 während der Montage.

Die Dichttülle 12 kann darüber hinaus an ihrem dem Dichtpad 11 abgewandten freien Ende 13 mit wenigstens einer Montagelasche 29 versehen sein. Die Montagelasche 29 ist zur Montage von einer dem Spiegelfuß 01 abgewandten Seite her durch wenigstens eine mittels der Dichttülle 12 der Dichtung 10 abzudichtende karosserieseitige Durchführungsöffnung 07 hindurch greifbar, um die Dichttülle 12 durch die Durchführungsöffnung 07 hindurchzuziehen.

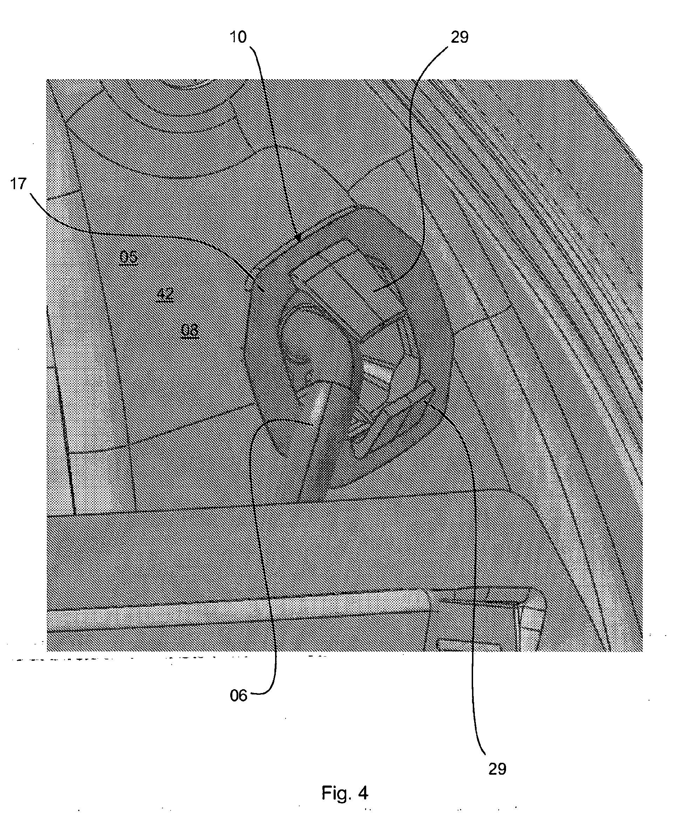

Die Dichttülle 12 kann wie in den Fig. 2 und 3 dargestellt derart lang auf dem Dichtpad 11 aufstehend ausgebildet sein, um einen einen abgeschlossenen Hohlraum 30 in einem Karosserieteil 05 passierenden Kabelbaum 06 entlang des gesamten Durchtritts durch den Hohlraum 30 hindurch zu umhüllen. Bei dem Karosserieteil 05 kann es sich beispielsweise um eine Kraftfahrzeugtür handeln. Der von der Dichttülle 12 umhüllte Kabelbaum 06 tritt dabei **durch eine in einer Außenwand 40 des Karosserieteils 05 vorgesehene erste** Durchführungsöffnung 31 und durch eine zweite Durchführungsöffnung 32 in einer ersten Trennwand 41 von einer ersten Seite her kommend in den Hohlraum 30 hinein und tritt durch eine dritte Durchführungsöffnung 33 in einer zweiten Trennwand 42 auf einer anderen, zweiten Seite aus dem Hohlraum 30 wieder aus. Die Dichttülle 12 ummantelt dabei den Kabelbaum 06 entlang des gesamten Durchtritts durch den Hohlraum 30. Gleichzeitig dichtet das Dichtpad 11 der Dichtung 10 die Partie 09 der karosserieseitig anliegendne Fläche 03 des Spiegelfußes 01 gegen die Außenwand 40 des Karosserieteils 05 ab. Der am freien Ende 13 der Dichttülle 13 angeordnete Flansch 17 überkragt die dritte Durchführungsöffnung 33 in der zweiten Trennwand 42 des Karosserieteils 05 vom Kabelbaum 06 aus gesehen radial nach aussen (Fig. 4) und dichtet so den Hohlraum 30 gegen einen von der Außenwand 40 aus gesehen beispielsweise weiter innen, hinter der zweiten Trennwand 42 in dem als Kraftfahrzeugtür ausgestalteten Karosserieteil 05 liegenden Trockenraum 50 ab. Der Flansch 17 hintergreift dabei vom Spiegelfuß 01 aus gesehen die dritte Durchführungsöffnung 33 und liegt dabei vom Hohlraum 30 aus gesehen hinter der zweiten Trennwand 42 am Rand der dritten Durchführungsöffnung 33 auf (Fig. 4).

Um darüber hinaus eine besonders gute Abdichtung des Trockenraums 50 gegenüber der außerhalb der Außenwand 40 des Karosserieteils 05 herrschenden Umgebung zu erhalten, weist die Dichttülle 12 mindestens einen jüngsten Innendurchmesser 34 auf, der kleiner ist, als ein kleinster Außendurchmesser des Kabelbaums 06. Darüber hinaus weist die Dichttülle 12 vorzugsweise an ihrem freien Ende 13 mindestens einen größten Außendurchmesser 35 auf, der größer ist, als ein Innendurchmesser der zur karosserieseitigen Durchführung des Kabelbaums 06 vorgesehenen Durchführungsöffnung 07, 31, 32, 33. Der größte Außendurchmesser 35 kann beispielsweise durch den Flansch 17 gebildet sein. Der Begriff Außendurchmesser ist hierbei nicht als Einschränkung auf kreisrunde Querschnitte zu verstehen, sondern vielmehr als allgemeiner Begriff für Masse von Ausdehnungen innerhalb eines oder mehrerer Querschnitte.

Wichtig ist hervorzuheben, dass in der karosserieseitig anliegenden Fläche 03 des Spiegelfußes 01 vorgesehene Aussparungen 04 zusätzlich wenigstens zum Teil mit einem elastischen Material 36 verfüllt sein können, beispielsweise können ein oder mehrere, beispielsweise zwei oder mehr Aussparungen 04 überdeckende Dichtmatten 37, 38 in die Aussparungen 04 gelegt sein (Fig. 1).

Ebenso wichtig ist hervorzuheben, dass die Dichtung 10 einstückig ausgeführt ist und die Bestandteile der Dichtung 10, beispielsweise Dichtpad 11, Dichttülle 12, Montagelaschen 29, Fortsätze 21, Montagenippel 26, Lippen 27, integral aneinander angeformt sind, beispielsweise in einem Ein- oder Mehrkomponenten-Spritzgussverfahren.

Die Erfindung ist insbesondere im Bereich der Herstellung von Außenrückblickspiegelanordnungen für Kraftfahrzeuge gewerblich anwendbar.

## Patentansprüche

1. Dichtung (10) einer Außenrückblickspiegelanordnung gegenüber einem Karosserieteil (05) eines Kraftfahrzeugs, bei der die Dichtung (10) einstückig ausgeführt ist und ein Dichtpad (11) und eine integral an das Dichtpad (11) angeformte Dichttülle (12) umfasst, wobei das Dichtpad (11) wenigstens eine Partie (09) der karosserieseitig anliegenden Fläche (03) eines Spiegelfußes (01) der Außenrückblickspiegelanordnung abdeckt und die Dichttülle (12) zur Abdichtung wenigstens einer karosserieseitig zur Durchführung eines Kabelbaums (06) der Außenrückblickspiegelanordnung vorgesehenen Durchführungsöffnung (07,31, 32, 33) dient, wobei die Dichttülle (12) als ein an dem Dichtpad (11) abgewandten freien Ende (13) offener Hohlkörper (14) ausgestaltet ist, am Schnittpunkt der Symmetrieachse (15) des Hohlkörpers (14) mit dem Dichtpad (11) eine Durchgangsöffnung (16) für den Kabelbaum (06) vorgesehen ist, und an dem Dichtpad (11) sowie an der karosserieseitig anliegenden Fläche (03) des Spiegelfußes (01) korrespondierende Befestigungselemente (18, 19, 21, 22) zur Fixierung der Dichtung (10) am Spiegelfuß (01) vorgesehen sind, **dadurch gekennzeichnet, dass** die Dichttülle (12) an ihrem dem Dichtpad (11) abgewandten freien Ende (13) mit wenigstens einer Montagelasche (29) versehen ist, welche von einer dem Spiegelfuß (01) abgewandten Seite her durch wenigstens eine mittels der Dichttülle (12) abzudichtende karosserieseitige Durchführungsöffnung (07, 31, 32, 33) hindurch greifbar ist, um die Dichttülle (12) durch die Durchführungsöffnung (07, 31, 32, 33) hindurchzuziehen.

2. Dichtung nach Anspruch 1, **dadurch gekennzeichnet, dass** die Dichttülle (12) derart lang auf dem Dichtpad (11) aufstehend ausgebildet ist, um einen abgeschlossenen Hohlraum (30) passierenden Kabelbaum (06), der durch eine erste Durchführungsöffnung (31) von einer ersten Seite her kommend in den Hohlraum (30) hinein und durch eine zweite Durchführungsöffnung (33) auf einer anderen, zweiten Seite aus dem Hohlraum (30) wieder austritt, unter gleichzeitiger Abdichtung wenigstens zweier entlang des Kabelbaums (06) aufeinander folgender Durchführungsöffnungen (31, 32, 33) zumindest entlang des gesamten Durchtritts durch den Hohlraum (30) hindurch zur umhüllen.

3. Dichtung nach Anspruch 1 oder 2, **dadurch gekennzeichnet, dass**
die Dichttülle (12) mindestens einen jüngsten Innendurchmesser (34) aufweist, der kleiner ist als ein kleinster Außendurchmesser des Kabelbaums (06) und/oder mindestens einen größten Außendurchmesser (17, 35) aufweist, der größer ist als ein Innendurchmesser der zur karosserieseitigen Durchführung des Kabelbaums (06) vorgesehenen Durchführungsöffnung (07, 31, 32, 33).

4. Dichtung nach Anspruch 1, 2 oder 3, **dadurch gekennzeichnet, dass**
die Dichttülle (12) vom Dichtpad (11) aus gesehen trichterförmig erweiternd ausgeführt ist.

5. Dichtung nach einem der vorangehenden Ansprüche , **dadurch gekennzeichnet, dass**
die korrespondierenden Befestigungselemente (18, 19) mindestens eine an dem Spiegelfuß (01) oder dem Dichtpad (11) angeordnete, in der karosserieseitig anliegenden Fläche (03) des Spiegelfußes (01) verlaufende Nut sowie mindestens eine an dem Dichtpad (11) oder dem Spiegelfuß (01) angeordnete, in die mindestens eine Nut formschlüssig einführbare Feder umfassen, wobei die Nut wenigstens eine in einer Richtung lokal normal zu der Fläche (03) wirksame Hintergreifung aufweist und die Nut mit Hintergreifung und die Feder korrespondierende Geometrien aufweisen, so dass ein Herausziehen der Feder aus der Nut normal zur Fläche (03) verhindert wird.

6. Dichtung nach Anspruch 5, **dadurch gekennzeichnet, dass**
Nut und Feder schwalbenschwanzartig ineinandergreifen.

7. Dichtung nach einem der vorangehenden Ansprüche , **dadurch gekennzeichnet, dass**
die korrespondierenden Befestigungselemente (18, 19) mindestens einen am Dichtpad (11) auf dessen der Dichttülle (12) abgewandter Seite (20) angeordneten Fortsatz (21) sowie wenigstens eine in der von dem Dichtpad (11) abgedeckten Partie (09) der karosserieseitig anliegenden Fläche (01) des Spiegelfußes (01) angeordnete, dem Fortsatz (21) zugeordnete Aufnahmeöffnung (22) umfassen, wobei der Fortsatz (21) vom Dichtpad (11) aus gesehen wenigstens einen ersten Abschnitt (23) mit Querschnittsabmessungen umfasst, welche mit der Aufnahmeöffnung (22) korrespondieren, sowie einen zweiten Abschnitt (24) mit einer Verdickung (25) umfassen, welche unter elastischer Verformung durch die Aufnahmeöffnung (22) hindurch passt, und im Anschluss an die elastisch Verformung eine reib-und/oder formschlüssige Verbindung zumindest mit einer die Aufnahmeöffnung (22) umgebenden Partie der karosserieseitig anliegenden Fläche (03) des Spiegelfußes (01) eingeht.

8. Dichtung nach Anspruch 7, **dadurch gekennzeichnet, dass**
der Fortsatz (21) an seinem dem Dichtpad (11) abgewandten und dem Spiegelfuß (01) zugewandten freien Ende mit wenigstens einem Montagenippel (26) versehen ist, welcher von der dem Dichtpad (11) abgewandten Seite des Spiegelfußes (01) durch die Aufnahmeöffnung (22) am Spiegelfuß (01) hindurch greifbar ist, um den Fortsatz (21) zur Fixierung der Dichtung (10) am Spiegelfuß (01) unter elastischer Verformung der Verdickung (25) durch die Aufnahmeöffnung (22) hindurchzuziehen.

9. Dichtung nach einem der vorhergehenden Ansprüche, **dadurch gekennzeichnet, dass** am Dichtpad (11) mindestens eine in Richtung des Spiegelfußes (01) abstehende Lippe (27) vorgesehen ist, welche in ihrer Geometrie an mindestens eine Aussparung (04) an und/oder mindestens einen Rand (28) der dem Dichtpad (11) zugewandten Fläche (03) des Spiegelfußes (01) angepasst ist.

10. Dichtung nach einem der vorhergehenden Ansprüche, **dadurch gekennzeichnet, dass** Montagelaschen (29), Nuten und/oder Federn, Fortsätze (21), Montagenippel (26), Lippen (27) integral an die Dichtung (10) angeformt sind.

11. Dichtung nach einem der vorhergehenden Ansprüche, **dadurch gekennzeichnet, dass** die Dichtung (10) aus einem zumindest in einer Richtung elastisch verformbaren Werkstoff oder Werkstoffmix besteht.

12. Dichtung nach Anspruch 11, **dadurch gekennzeichnet, dass** der Werkstoff oder Werkstoffmix wenigstens im Bereich des Dichtpads (11) ausgeschäumt ist.

13. Außenrückblickspiegelanordnung für ein Kraftfahrzeug, **gekennzeichnet durch** eine Dichtung (10) nach einem der vorhergehenden Ansprüche

## Claims

1. A seal (10) of an exterior rear view mirror assembly relative to a body part (05) of a motor vehicle, wherein the seal (10) is formed as one piece and comprises a sealing pad (11) as well as a sealing grommet (12) integrally moulded on the sealing pad (11), wherein the sealing pad (11) covers at least one section (09) of the surface (03) of a mirror base (01) of the exterior rear view mirror assembly lying on the bodywork side and the sealing grommet (12) serves for sealing at least one feed-through opening (07, 31, 32, 33), which is provided on the bodywork side for feed-through of a cable harness (06) of the exterior rear view mirror assembly, wherein the sealing grommet (12) is formed as an open hollow body (14) on the free end (13), which is turned away from the sealing pad (11), a passage opening (16) is provided for the cable harness (06) at the intersection of the symmetry axis (15) of the hollow body (14) with the sealing pad (11), and corresponding fastening elements (18, 19, 21, 22) for fixing the seal (10) to the mirror base (01) are provided on the sealing pad (11) and on the surface (03) of the mirror base (01) lying on the bodywork side, **characterized in that** the sealing grommet (12) is provided with at least one mounting bracket (29) on its free end (13), which is turned away from the sealing pad (11), which mounting bracket can be engaged from one side, which is turned away from the mirror base (01), through at least one feed-through opening (07, 31, 32, 33) on the bodywork side, which is to be sealed by means of the sealing grommet (12), in order to pull the sealing grommet (12) through the feed-through opening (07, 31, 32, 33).

2. The seal according to Claim 1, **characterized in that**
the sealing grommet (12) is formed standing up sufficiently long on the sealing pad (11), in order to envelope a cable harness (06) passing through a connected hollow body (30), which enters the hollow body (30) through a first feed-through opening (31) from a first side and exits the hollow body (30) again through a second feed-through opening (33) on another, second side, simultaneously sealing at least two consecutive feed-through openings (31, 32, 33) along the cable harness (06) at least along the entire through-passage through the hollow body (30).

3. The seal according to Claim 1 or 2, **characterized in that**
the sealing grommet (12) has at least one most reduced inside diameter (34) which is smaller than a smallest outside diameter of the cable harness (06) and/or has at least one largest outside diameter (17, 35) which is larger than an inside diameter of the feed-through opening (07, 31, 32, 33), which is provided for the feed-through of the cable harness (06) on the bodywork side.

4. The seal according to Claim 1, 2 or 3, **characterized in that**
the sealing grommet (12) is configured to widen in a funnel shape when viewed from the sealing pad (11).

5. The seal according to any one of the preceding claims, **characterized in that**
the corresponding fastening elements (18, 19) comprise at least one groove arranged on the mirror base (01) or the sealing pad (11), extending in the surface (03) of the mirror base (01) lying on the bodywork side as well as at least one spring which is arranged on the sealing pad (11) or the mirror base (01), which can be inserted with a positive fit into the at least one groove, wherein the groove has at least one engaging mechanism which is effective in a direction locally normal to the surface (03) for the engaging mechanism and the groove with the engaging mechanism and the spring have corresponding geometries, so that extracting of the spring from the groove normal to the surface (03) is prevented.

6. The seal according to Claim 5, **characterized in that**
the spring and groove interlock in a dovetailing manner.

7. The seal according to any one of the preceding claims, **characterized in that**
the corresponding fastening elements (18, 19) comprise at least one extension (21) arranged on the sealing pad (11) on the side (20) thereof which is turned away from the sealing grommet (12) and at least one receptacle opening (22) assigned to the extension (21) in the section (09) of the surface (03) of the mirror base (01) lying on the bodywork side, which is covered by the sealing pad (11), wherein the extension (21), viewed from the sealing pad (11), comprises at least a first section (23), which has cross-sectional dimensions which correspond to the receptacle opening (22), and a second section (24) with a thickened portion (25), which fits through the receptacle opening (22) under elastic deformation and which, following the elastic deformation, enters a frictionally engaged and/or positive connection with at least one section surrounding the receptacle opening (22) of the surface (03) of the mirror base (01) lying on the bodywork side.

8. The seal according to Claim 7, **characterized in that**
the extension (21) is provided with at least one mounting nipple (26) on its free end, which is turned away from the sealing pad (11) and which is turned towards the mirror base (01), which can be engaged from the side of the mirror base (01), which is turned away from the sealing pad (11), through the receptacle opening (22) on the mirror base (01), in order to pull the extension (21) for fixing the seal (10) to the mirror base (01) under elastic deformation of the thickened portion (25) through the receptacle opening (22).

9. The seal according to any one of the preceding claims, **characterized in that**
at least one lip (27) projecting in the direction of the mirror base (01) is provided on the sealing pad (11), which, in its geometry, is adjusted to at least one recess (04) on and/or at least one edge (28) of the surface (03) of the mirror base (01), which is turned towards the sealing pad (11).

10. The seal according to any one of the preceding claims, **characterized in that**
mounting brackets (29), grooves and/or springs, extensions (21), mounting nipples (26) and lips (27) are integrally moulded on the seal (10).

11. The seal according to any one of the preceding claims, **characterized in that**
the seal (10) consists of a material or mix of materials which is elastically deformable in at least one direction.

12. The seal according to Claim 11, **characterized in that**
the material or mix of materials is filled with foam at least in the region of the sealing pad (11).

13. An exterior rear view mirror assembly for a motor vehicle, **characterized by** a seal (10) in accordance with any one of the preceding claims.

## Revendications

1. Joint d'étanchéité (10) d'un agencement de rétroviseur extérieur contre une pièce de carrosserie (05) d'un véhicule automobile, dans lequel le joint d'étanchéité (10) est réalisé en une seule pièce, et comprend un coussin d'étanchéité (11) et un passe-fil d'étanchéité (12) moulé en un seul bloc sur le coussin d'étanchéité (11), de telle sorte que le coussin d'étanchéité (11) couvre au moins une partie (09) de la surface (03) de la base de rétroviseur (01) de l'agencement de rétroviseur extérieur côté carrosserie, et le passe-fil d'étanchéité (12) sert à étanchéifier au moins une ouverture de passage traversant (07, 31, 32, 33) agencée côté carrosserie, pour la traversée d'un faisceau de câbles (06) de l'agencement de rétroviseur extérieur, de telle sorte que le passe-fil d'étanchéité (12) est agencé sous la forme d'un corps ouvert (14) sur l'extrémité libre (13) située à l'opposé du coussin d'étanchéité (11), et une ouverture de passage (16) pour le faisceau de câbles (06) est agencée à l'intersection de l'axe du symétrie (15) du corps creux (14) avec le coussin d'étanchéité (11), et en ce que des éléments de fixation (18, 19, 21, 22) correspondants, destinés à fixer le joint d'étanchéité (10) sur la base de rétroviseur (01), sont agencés sur le coussin d'étanchéité (11) de même que sur la surface côté carrosserie (03) de la base de rétroviseur (01), **caractérisé en ce que** le passe-fil d'étanchéité (12) est doté, sur son extrémité libre (13) à l'opposé du coussin d'étanchéité (11), d'au moins une languette de montage (29), qui est saisie, depuis un côté opposé à la base de rétroviseur (01), à travers l'ouverture de passage traversant (07, 31, 32, 33) devant être étanchéifiée au moins au moyen du passe-fil d'étanchéité (12), afin de faire passer le passe-fil d'étanchéité (12) à travers l'ouverture de passage traversant (07, 31, 32, 33).

2. Joint d'étanchéité selon la revendication 1, **caractérisé en ce que** le passe-fil d'étanchéité (12) est réalisé suffisamment long debout sur le coussin d'étanchéité (11) pour envelopper un faisceau de câbles (06) traversant une cavité fermée (30), en entrant à l'intérieur de la cavité fermée (30) depuis un premier côté à travers une première ouverture de passage traversant (31), et en sortant de la cavité (30) à travers une seconde ouverture de passage traversant (33) sur un second côté, en étanchéifiant simultanément au moins deux ouvertures de passage traversant (31, 32, 33) successives le long du faisceau de câbles (06), au moins le long de tout le passage à travers la cavité (30).

3. Joint d'étanchéité selon la revendication 1 ou 2, **caractérisé en ce que** le passe-fil d'étanchéité(12) présente au moins un diamètre intérieur final (34), qui est plus petit que le diamètre extérieur le plus petit du faisceau de câbles (06), et/ou présente au moins un diamètre extérieur le plus grand (17, 35), qui est plus grand que le diamètre intérieur de l'ouverture de passage traversant (07, 31, 32, 33) qui est prévue pour la traversée du faisceau de câbles (06) côté carrosserie.

4. Joint d'étanchéité selon les revendications 1, 2 ou 3, **caractérisé en ce que** le passe-fil d'étanchéité (12) a une forme d'entonnoir étendu, vu depuis le coussin d'étanchéité (11).

5. Joint d'étanchéité selon l'une quelconque des revendications précédentes, **caractérisé en ce que** des éléments de fixation correspondants (18, 19) comprennent au moins une rainure agencée sur la base de rétroviseur (01) ou sur le coussin d'étanchéité (11), s'étendant dans la surface (03) de la base de rétroviseur (01) côté carrosserie, de même qu'au moins un ressort agencé sur le coussin d'étanchéité (11) ou la base de rétroviseur (01), pouvant être inséré d'une manière à coopération de formes dans la au moins une rainure, dans lequel la rainure comporte au moins un tenon de mise en prise arrière agissant efficacement dans une direction qui est localement perpendiculaire à la surface (03), et la rainure ayant un tenon de mise en prise arrière et le ressort présentant des géométries correspondantes, de manière à empêcher que le ressort soit retiré de la rainure perpendiculairement à la surface (03).

6. Joint d'étanchéité selon la revendication 5, **caractérisé en ce que** le tenon et la rainure s'emboîtent à la manière d'une queue d'aronde

7. Joint d'étanchéité selon l'une quelconque des revendications précédentes, **caractérisé en ce que** des éléments de fixation correspondants (18, 19) comprennent au moins un prolongement (21) agencé sur le coussin d'étanchéité (11) sur son côté opposé au passe-fil d'étanchéité (12), de même qu'au moins une ouverture de réception (22) agencée dans la partie (09) recouverte par le coussin d'étanchéité (11) de la surface (03) de la base de rétroviseur (01) côté carrosserie, et dédiée au prolongement (21), de sorte que vu depuis le coussin d'étanchéité (11), le prolongement (21) comporte au moins un premier tronçon (23) ayant des dimensions en coupe transversale, correspondant à l'ouverture de réception (22), de même qu'un second tronçon (24) présentant un renflement (25), qui passe à travers l'ouverture de réception (22) sous une déformation élastique, et suite à la déformation élastique survient une connexion de mise en prise par frottement ou par coopération de formes avec au moins une partie, entourant l'ouverture de réception (22), de la surface (03) de la base de rétroviseur (01) côté carrosserie.

8. Joint d'étanchéité selon la revendication 7, **caractérisé en ce que** le prolongement (21) est doté, à son extrémité libre à l'opposé du coussin d'étanchéité (11) et vers la base de rétroviseur (01), d'au moins un raccord d'assemblage (26), qui peut être saisi depuis le côté de la base de rétroviseur (01) opposé au coussin d'étanchéité (11) à travers l'ouverture de réception (22) située sur la base de rétroviseur (01), pour enfiler le prolongement (21) à travers l'ouverture de réception (22) au moyen d'une déformation élastique du renflement (25), afin de fixer le joint d'étanchéité (10) sur la base de rétroviseur (01).

9. Joint d'étanchéité selon l'une des revendications précédentes, **caractérisé en ce qu'**au moins une lèvre (27) faisant saillie dans la direction de la base de rétroviseur (01) est prévue sur le coussin d'étanchéité (11), qui est adaptée dans sa géométrie à au moins un évidement (04), et/ou au moins un bord (28) de la surface (03) de la base de rétroviseur (01) opposé au coussin d'étanchéité (11).

10. Joint d'étanchéité selon l'une des revendications précédentes, **caractérisé en ce que** les languettes de montage (29), les rainures et/ou ressorts, le prolongement (21), le raccord d'assemblage (26), et les lèvres (27) sont formés en un seul bloc sur le joint d'étanchéité (10).

11. Joint d'étanchéité selon l'une des revendications précédentes, **caractérisé en ce que** le joint d'étanchéité (10) est constitué d'au moins un matériau ou mélange de matériaux pouvant se déformer élastiquement dans une direction.

12. Joint d'étanchéité selon la revendication 11, **caractérisé en ce que** le matériau ou le mélange de matériaux est rempli de mousse, au moins dans la zone du coussin d'étanchéité (11).

13. Agencement de rétroviseur extérieur pour un véhicule automobile, **caractérisé par** un joint d'étanchéité (10) selon l'une quelconque des revendications précédentes.
